Europäisches Patentamt

(19) European Patent Office

Office européen des brevets

(11) Publication number: **0 147 168**
A2

(12) # EUROPEAN PATENT APPLICATION

(21) Application number: **84308895.6**

(22) Date of filing: **19.12.84**

(51) Int. Cl.⁴: **G 02 B 6/28**

(30) Priority: **19.12.83 US 563293**

(43) Date of publication of application:
**03.07.85 Bulletin 85/27**

(84) Designated Contracting States:
**AT BE CH DE FR GB IT LI LU NL SE**

(71) Applicant: **Litton Systems, Inc.
360 North Crescent Drive
Beverly Hills California 90210(US)**

(72) Inventor: **Hall, David Barnett
5165 Finehill Avenue
La Crescenta, California 91214(US)**

(74) Representative: **Ashmead, Richard John et al,
KILBURN & STRODE 30 John Street
London, WC1N 2DD(GB)**

(54) **Three port coupler.**

(57) This invention is a three port fiber optic coupler for coupling light between a straight fiber having a planar exposed core portion on an end thereof and a curved fiber having an exposed planar portion on the side of the curved fiber. The curved fiber is mounted in an arcuate groove in a flat surface of a substrate which has been ground and polished to expose a portion of the core of the curved fiber. The straight fiber intersects the exposed surface of the core of the curved fiber at a predetermined angle, and the end of the straight fiber is formed such that the exposed core at the end of the straight fiber has an area that matches the area of the exposed core portion of the curved fiber as closely as possible to minimize signal loss in the coupler.

Fig. 1

Croydon Printing Company Ltd.

1.

## THREE PORT COUPLER

This invention relates generally to fiber optic couplers and particularly to three port couplers.

Ordinary multimode fiber optic couplers typically have high insertion losses, which is not a problem in many multimode fiber optic systems where there are no severe limitations due to signal strength. In many applications of multimode fibers, the signal intensity is sufficiently strong to have adequate throughput even though couplers used in the fibers may have high insertion losses.

Multimode fiber optic couplers have long been known in the art. It is possible to couple light from one multimode fiber to another by placing the fibers adjacent one another and heating the fibers with a blow torch to cause the fiber cores to intersect. This procedure permits the formation of multimode couplers having three or more ports. A three port coupler is useful for connecting sensor arrays to transmit and receive fibers and for interconnecting signalling arrays so that the various components thereof may be in communication with one another.

Four port couplers commonly used in multimode and single-mode fiber optic applications generally suffer a signal loss in connection to signal arrays because such connections generally require only 3 ports, leaving one port of the 4 port coupler as a free end, from which light may propagate out of an array.

It is an object of the present invention to produce a multimode fiber optic coupler, more particularly a three port coupler, having advantages over the known arrangements.

According to one aspect of the invention a three port fiber optic coupler comprises a first optical fiber having a curved region and a part removed in the curved region to provide a substantially chordal surface, and a second optical fiber having a substantially elliptical end surface, the two said surfaces being connected one to another to couple light propagating in one of said first or second fibers into the other.

The curved region of the first optical fiber is preferably arcuate at least over the length from which the part is removed to provide the said substantially chordal surface. The said chordal surface is preferably a planar surface disposed substantially normally to a radius of the first fiber in the said curved region. The chordal surface will therefore be seen to be substantially parallel to a plane tangential to the periphery of the first fiber and normal to the said radius. The difference between the tangential plane and the plane of the chordal surface is the depth of the part removed from the said curved region. The term "chordal" is used to define the planar surface on the first optical fiber as it will be seen to appear as a chord to the external periphery of the first fiber in the said curved region when viewed in the plane which it occupies.

As stated above the curved region is preferably arcuate in the sense of having a constant radius to a fixed point. Where it deviates from a strictly constant radius the benefits of the invention may still apply, regular or irregular slight variations
from constant radius being treated, mutatis mutandis,
as if they were the equivalent constant radius over the
said curved region.

The diameter of the first fiber preferably exceeds
that of the second fiber, and the second fiber is
preferably a straight fiber, at least in the region
where it approaches the juncture of its elliptical
surface with the said chordal surface. The straight
second fiber intersects the exposed chordal surface
of the core of the first curved fiber at an angle
hereinafter referred to as the approach angle. As
both the fibers are preferably circular in cross-
section, an angular cut across the straight first
fiber produces an elliptical end surface thereon.
The exposed core portion of the curved first fiber
is not an ellipse and the efficiency of the coupler
depends upon the area mismatch between the elliptical
end of the second fiber and the exposed chordal surface
of the first fiber. The inventor has found that it
is possible, through proper choices of fiber diameters,
depth of material removal to produce the said chordal
surface and approach angle to match the elliptical end
of the second fiber to the exposed portion of the first
fiber so that the percentage of area mismatched
can be negligible and thereby result in advantageously
high coupling efficiency.

The said surfaces, the elliptical surface of the second
fiber and the not quite elliptical chordal surface
are therefore preferably substantially equal in area
for example they may have substantially equal major
and minor axes and semi-axes.

The approach angle θ is given by the equation

$$\theta = \sin^{-1} \left[ \frac{2a - d}{2(a+b)} \right]^{\frac{1}{2}}$$

when a is the radius of the first fibre, b is the radius of curvature of the first fibre in the said curved region and d is depth of the part removed from said curved region. The approach angle θ is preferably less than the grazing angle at which total internal reflection occurs.

In a preferred form of the invention the coupler comprises a first optical fibre having a first fibre core and a surrounding first fibre cladding, a part of said first fibre core surface having a boundary forming a predetermined geometrical configuration;

a second optical fibre having a second fibre core, said second fibre core having an end with a second fibre core surfaced formed thereon to match with said first fibre core surface; and

means for mounting said first and second optical fibres adjacent one another with said first and second fibre core surfaces being adjacent one another and aligned to couple light propagating in one of said first or second fibres into the other.

In this form the first optical fibre preferably has a curved configuration and the first fibre at chordal surface has a centre portion facing generally radially outward from the curved configuration. The curved configuration is preferably substantially an arc of a circle so that the first fibre forms a section of a torus with the first fibre chordal surface being substantially perpendicular to a radius of the torus.

Thus the present invention may assist in overcoming deficiencies associated with prior multimode fibre optic couplers in applications such as signal rays, sensor arrays and data buses by using a perfectly straight fibre having a small core diameter connected to an exposed planar core portion of a curved optical fibre having a larger core diameter.

The curved fibre is preferably mounted in an arcuate groove in a flat surfaced substrate which is then ground and polished to expose a portion of the core of the curved fibre. The mounting means may therefore comprise:

a first substrate including a first planar surface with an arcuate groove formed therein, said arcuate groove having a maximum depth at the edges of said planar surface and a minium depth near the central portion thereof; said first optical fibre being affixed in said arcuate groove with said first fibre core surface being coplanar with the central portion of said first planar surface;

a second substrate including a second planar surface, said second substrate having a slot therein making a predetermined angle with said second planar surface, said second optical fibre being affixed in said slot, said second fibre core surface being coplanar with said second planar surface; and

means for retaining said first and second substrates together with said first fibre core surface and said second fibre core surface being adjacent one another with a predetermined area of overlap therebetween.

The percentage of light which can be coupled between the fibres may be tuned by pre-selection of the relative cross-sectional areas of the first and second fibres.

According to a further aspect of the invention a method of forming a three port fibre optic coupler comprises the steps of exposing a substantially chordal surface in a curved portion of a first optical fibre, forming a substantially elliptical end surface on a second optical fibre such that the areas of the chordal surface and elliptical surfaces are substantially equal, mounting the first and second optical fibres with their surfaces adjacent one another to cause light propagating in one of the fibres to be coupled into the other. The method further includes the steps of

forming a arcuate groove in a planar surface of a first substrate such that the depth of the arcuate groove is a minimum near the central portion of the planar surface of the first substrate and a maximum at the edges thereof;

mounting the first optical fibre in the arcuate groove;

grinding and polishing the planar surface of the first substrate and the first optical fibre near the central portion of the first substrate surface to expose the first fibre optic core surface;

forming a linear groove in a second substrate, said linear groove making a predetermined angle with a planar surface of the second substrate;

mounting the second optical fibre in the linear groove;

grinding and polishing the second substrate planar surface to form the second fibre optic core surface in a region coplanar with the second substrate planar surface; and

clamping the first and second substrates together with the first fibre optic core surface and the second fibre optic core surface having a predetermined overlap area, the first fibre optic core surface having been polished to a predetermined depth and the second optical fibre forming a predetermined angle with the second substrate surface to provide a predetermined correspondence between the area of said first fibre core surface and said second fibre core surface.

The invention may be embodied in a number of ways and some specific examples will now be described, by way of example, with reference to the accomanying drawings in which:

Figure 1 is a perspective view of a three port coupler according to the invention illustrating the intersections of a small straight fibre with a larger curved fibre;

Figure 2 is a partial cross-sectional view taken along line 2-2 of Figure 1;

Figure 3 illustrates matching between facing areas of the smaller fibre and the larger fibre of Figures 1 and 2;

Figure 4 illustrates the cores of the fibres of Figure 1;

Figure 5 is a plan view of a torus showing a flattened portion on an edge thereof;

Figure 6 is an elevation view of the torus of Figure 5;

Figure 7 is a cross-sectional view of the torus of Figures 5 and 6;

Figures 8a-8e illustrate steps in forming the coupler of Figure 1;

Figure 9 illustrates the coupler according to the invention being used in a sensor array;

Figure 10 illustrates use of the coupler according to the invention in a communications network; and

Figures 11a-11c graphically illustrate relationships between the elliptical axes and the approach angle as functions of polishing depth for particular values of the radii of the two fibers and radius of curvature of the larger fiber.

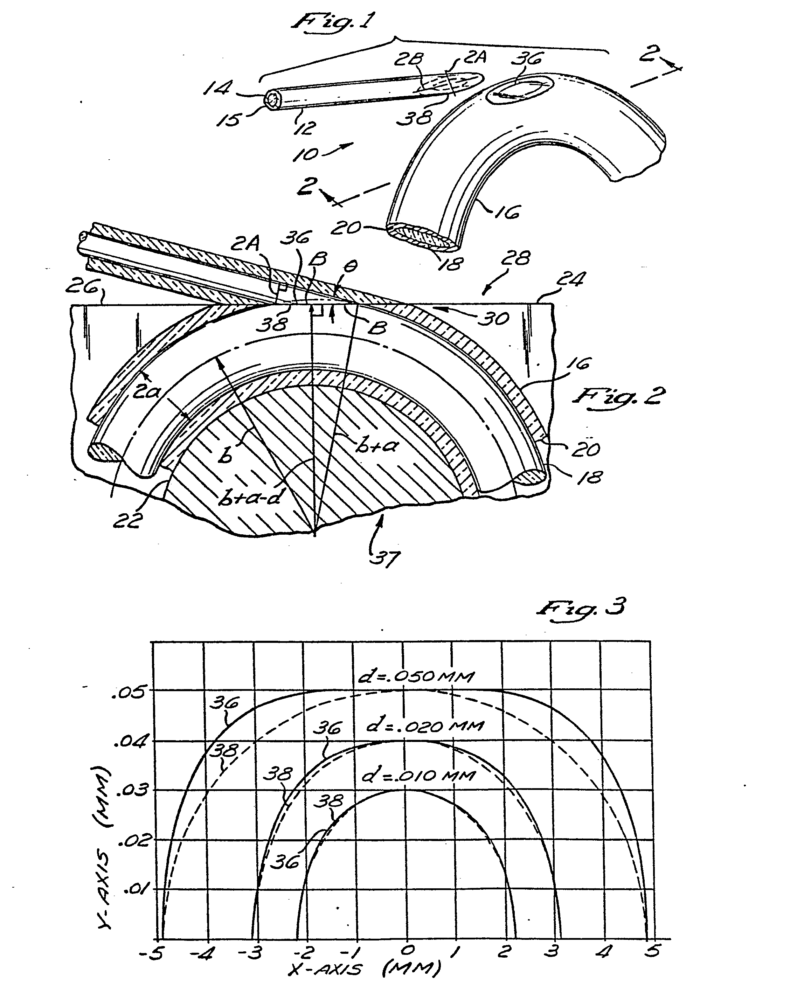

Referring to Figures 1 and 2, a three port coupler 10 according to the invention includes a straight optical fiber 12 having a core 14 surrounded by a cladding 15 and a curved optical fiber 16 having a core 18 surrounded by a cladding 20.

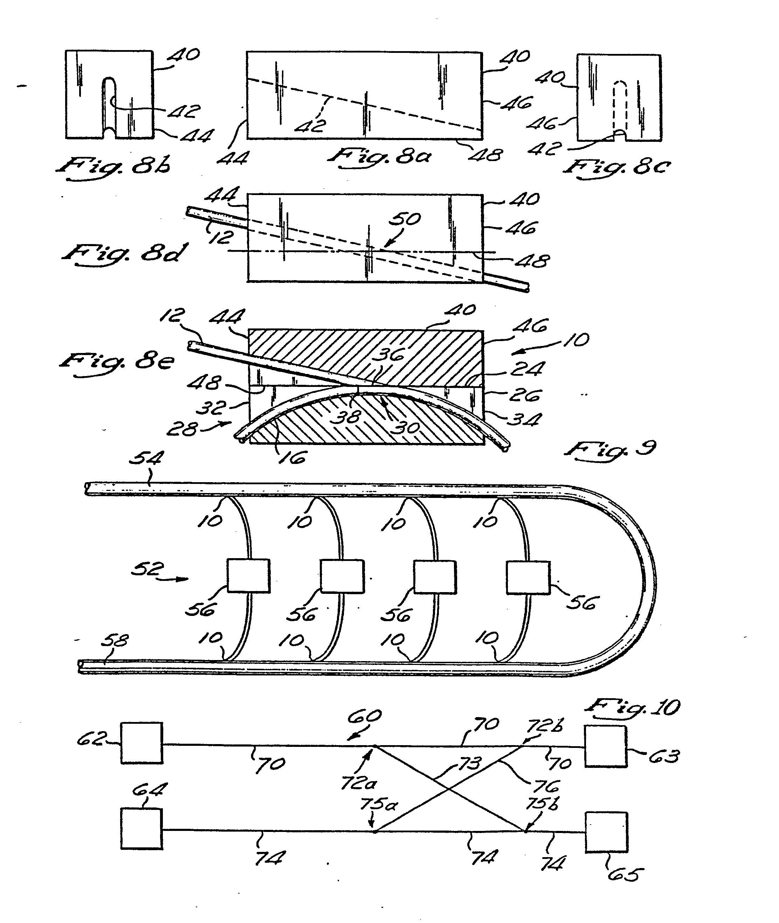

As shown in Figures 2 and 8e, the curved fiber 16 is preferably mounted in an arcuate groove 22 formed in a flat surface 24 in a substrate 26 preferably formed of a block of fused quartz. The curved fiber 16 and slotted substrate 26 cooperate to form a half coupler 28. The half coupler 28 is formed by cementing the fiber 16 in the arcuate groove 22 and grinding and polishing away a portion of the substrate 26 at the surface 24 until a desired portion of the core 18 is exposed. The arcuate groove 22 is preferably formed as an arc of a circle so that in the flat surface 24 the groove 22 is shallow at the center portion 30 of the substrate 26 and deeper at the edges 32 and 34 as shown in Figure 8e. The fiber 16 thus forms a portion of a torus. Grinding the surface 24 cuts into the fiber 16 at the center portion 30 of the substrate since the fiber 16 conforms to an arc of a circle in the arcuate groove 22. The exposed portion 36 of the core 18 is a planar surface resembling an ellipse but with sides and ends that are somewhat flattened.

As can be best seen in Figures 1 and 2, in order to provide a good coupling efficiency, the straight core 14 must have an end surface 38 configured as closely as possible to the shape of the exposed core portion 36 on the fiber 16. Since the fiber 12 is circular in cross-section, a planar cut across the fiber that is not along the radius will form an elliptical end surface 38 on the fiber 12. Therefore a principal problem in forming the coupler 10 is matching the elliptical end 38 to the exposed core portion 36 on the fiber 16.

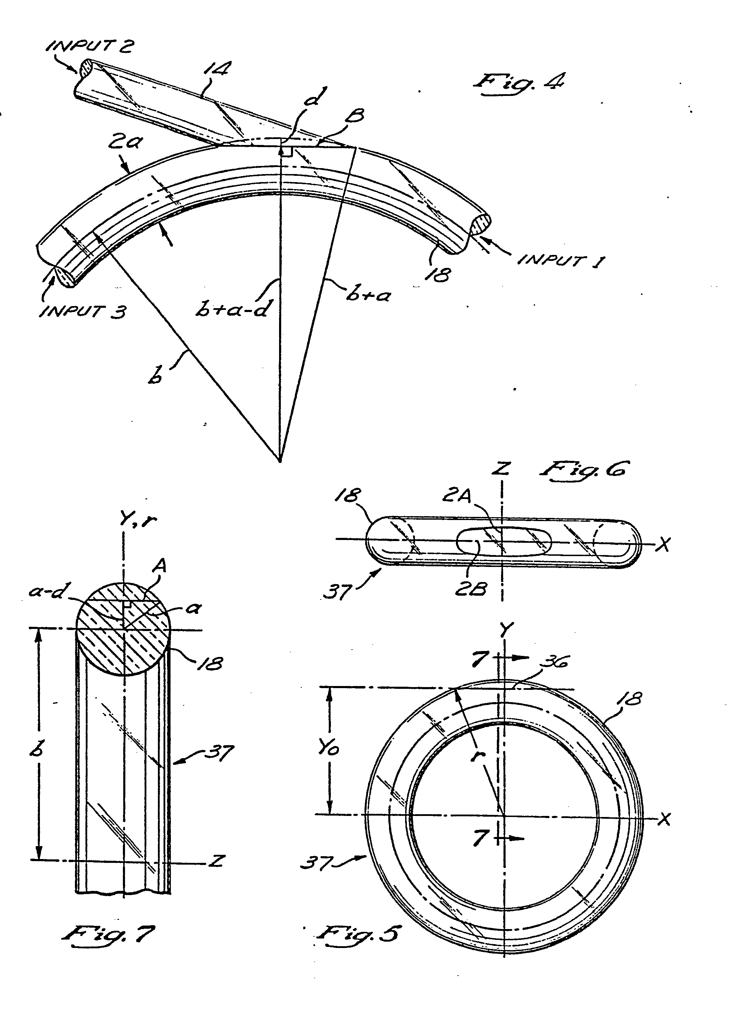

Referring to Figure 1, the elliptical end 38 has a semi-minor axis A and a semi-major axis B. Figures 1 and 6 illustrate a representative exposed core portion 36 on the outer portion of the fiber 16. In order to match the elliptical end surface 38 to the surface 36, the semi-minor axis A and the semi-major axis B of the elliptical surface 38 must equal the shortest and longest distances, respectively, from the center of the surface 36 to the boundary thereof. As shown in Figures 2 and 4, the radius of the core 18 is a, and the distance from the center of the torus to the center of the fiber is b. The substrate 26 and the fiber 16 are ground and polished so that the exposed portion 36 is a distance d, measured along a radius of the torus, inward from the outer edge of the core 18. The distance b + a from the center of the torus is the hypotenuse of a right triangle having legs B and b + a - d; therefore, by the well-known Pythagorean theorem

$$(b+a)^2 = (b+a-d)^2 + B^2 \qquad (1)$$

Solving Equation (1) for B yields

$$B = [-d^2 + 2d(a+b)]^{\frac{1}{2}} \qquad (2)$$

If d is small compared to (a + b), then the d term is negligible; and, therefore,

$$B = [2d(a+b)]^{\frac{1}{2}} \cdot \qquad (3)$$

For convenience of presenting the following design calculations, the core portion 18 of the curved fiber 16 may be visualized as a portion of a torus 37 as shown in Figures 5 through 7. In the Figures 5 through 7, x, y, and z are mutually perpendicular axes of torus 37 where the x and y axes are, respectively, parallel and perpendicular to surface 36, and z is perpendicular to the plane of the torus and parallel to surface 36. Referring to Figure 7, which represents a cross-section of the torus, the equation of the upper circle is

$$(r-b)^2 + z^2 = a^2 \qquad (4)$$

It is to be noted that Figure 7 represents a special case in which the r and y axes coincide. However, it is to be understood that equation (4) holds for any cross-section through torus 37 along radius r, where r is the perpendicular distance from the z axis of the torus 37 to any point on the torus.

Solving Equation (5) for r yields

$$r = b \pm (a^2 - z^2)^{\frac{1}{2}} \qquad (5)$$

Referring to Figure 5, a line extending a distance r from the center of the torus has a length

$$r = (x^2 + y_o^2)^{\frac{1}{2}} \qquad (6)$$

If the surface 36 is a distance $y_o$ along the y-axis from the center of the torus, then points on the major axis 2B are located at

$$r = (x^2 + y_o^2)^{\frac{1}{2}} \qquad (7)$$

from the x-axis of Figure 5. Equating the expressions for r from Equations 5 and 6 yields

$$r = (x^2 + y_o^2)^{\frac{1}{2}} = b \pm (a^2 - z^2)^{\frac{1}{2}} \qquad (8)$$

If a, b and $y_o$ are fixed, then the result is an equation of a curve with x and z as the variables. Solving for x yields

$$x = [(b \pm (a^2 - z^2)^{\frac{1}{2}})^2 - y_o^2]^{\frac{1}{2}} \qquad (9)$$

Figure 7 shows a cross-section of the torus taken along the y-axis of Figure 5. The radius a of the fiber is the hypotenuse of a right triangle having sides A, the semi-minor axis of the elliptical end 38 of Figure 2, and a - d. Therefore, the sides of this right triangle are related by

$$a^2 = A^2 + (a-d)^2 \qquad (10)$$

which reduces to

$$A = [d(2a-d)]^{\frac{1}{2}} \qquad (11)$$

Referring to Figure 1, the semi-minor axis A of the ellipse 38 must equal half the diameter of the straight core 14. Therefore, referring to Figures 1 and 2, the length of the surface 36 is 2B, which is the hypotenuse of a right triangle having a side 2A, the diameter of the core 14, and a side that forms an acute angle $\theta$ with the hypotenuse 2B.

The angle $\theta$ is related to the sides 2A and 2B of the triangle by the well-known trigonometric equation

$$\sin \theta = \frac{2A}{2B} = \frac{A}{B} \qquad (12)$$

Therefore, from equations (3), (11), and (12), the angle $\theta$ is given by

$$\theta = \sin^{-1} \left[ \frac{2a-d}{2(a+b)} \right]^{\frac{1}{2}} . \qquad (13)$$

which is the angle at which the fiber 12 must be cut to match the elliptical end 38 with the exposed surface 36 of the core 18.

Typical multimode optical fibers have core diameters ranging from 50 to 100 microns.

The parameters of the straight fiber 12 may be determined as functions of the depth d to which a curved fiber 16 of fixed core radius and radius of curvature is ground and polished. Table I gives values of the approach angle $\theta$, the seminimor axis A, and the semimajor axis B of a representative three port coupler in which the larger (curved) fiber 16 has a core radius a = 0.050 mm and a radius of curvature of b = 240 mm. It will be recalled that the radius of the core 14 of straight fiber 12 is its semi-minor axis A.

TABLE I

| d(mm) | A(mm) | B(mm) | $\theta$ (degrees) |
|-------|-------|-------|-------|
| 0 | 0 | 0 | 0.8269 |
| 0.002 | 0.0140 | 0.980 | 0.8186 |
| 0.005 | 0.0218 | 1.549 | 0.8060 |

| | | | |
|---|---|---|---|
| 0.01 | 0.0300 | 2.191 | 0.7845 |
| 0.015 | 0.0357 | 2.684 | 0.7624 |
| 0.020 | 0.0400 | 3.099 | 0.7396 |
| 0.025 | 0.0433 | 3.464 | 0.7161 |
| 0.030 | 0.0458 | 3.795 | 0.6919 |
| 0.035 | 0.0477 | 4.099 | 0.6667 |
| 0.040 | 0.0490 | 4.382 | 0.6405 |
| 0.045 | 0.0497 | 4.648 | 0.6133 |
| 0.050 | 0.0500 | 4.899 | 0.5847 |

Figures 11a-11c show graphical representations of the semiminor axis, the semimajor axis and the approach angle as functions of the polish depth. It should be noted that the values of the semiminor axis A are the required radii of the straight fiber 12 for matching with the 100 micron diameter curved fiber 16 polished to the depths shown in Table I.

Referring to Figure 3, the shapes of the exposed core portions 36 and 38 are shown as if viewed by looking down on Figure 6. Note that, in Figure 3, the scale of the z axis (semiminor axis) is one hundred times larger than the x axis (semimajor axis) scale. The greater degree of correspondence of the core portions 36 and 38 for each of the three line pairs shown, the lower is the area of mismatch between the surfaces 36 and 38.

A few special cases of interest are shown in Figure 3. If the polish depth d is equal to the radius a of the curved fiber 16, then both the straight core 14 and the curved core 18 must have the same radius because the width of the surface is then the diameter of the curved core 18; and the diameter of the straight core 14 must equal the width of the surface. Therefore, for a 50 micron radius (100 micron diameter) curved core 18 polished to a depth of 0.050 mm (50 microns), the straight core 14 must have a radius of 0.050mm and must be ground and polished so that the angle of approach is 0.5847 degrees, which means that the elliptical end 38 of the straight core 14 has a semiminor axis of 0.050 mm and a semimajor axis of 4.899 mm. The resulting ellipse 38 has an 11.3% area mismatch with the surface 36 on the curved core 18.

A second special case for the 100 micron diameter curved core 18 is d = 0.020 mm, which results in a straight core 14 with radius of 0.040 mm, (80 micron diameter) an approach angle of 0.7396 degrees and a semimajor axis of 3.099 mm. The area of mismatch is very small for this special case.

A third special case for the 100 micron curved core 18 is d = 0.010 mm, which results in a straight core 14 diameter of 0.060 mm (60 microns) an approach angle of 0.7845 degrees, and a semimajor axis of 2.191 mm. The area of mismatch is negligible for this case.

Propagation of light within an optical fiber requires that the light propagating in the core strike the core-cladding interface at a grazing angle less than the angle required for total internal reflection. At angles greater than this grazing angle, light is lost by transmission from the core across the core-cladding interface into the cladding.

To avoid such loss, the approach angle $\theta$ must be smaller than the grazing angle at which total internal reflection occurs. For a fiber having a numerical aperture of 0.1, the grazing angle is about $3^{o}$ inside the fiber, which is greater than the values of the approach angle listed in Table I.

Figures 8a-8e illustrate steps involved in constructing the three port coupler 10 of the present invention. Referring to Figures 8a-8c a substrate 40 has a linear slot 42 therethrough at a predetermined angle so that the straight fiber 12 extends farther into the substrate 40 at one end 44 than at the other end 46. A surface 48 of the substrate 40 is ground and polished to remove a sufficient amount of material so that the straight fiber 12 emerges from the substrate 40 near the central portion 50 of the surface 48. The grinding and polishing procedures are carefully controlled so that the straight fiber 12 makes an angle equal to the approach angle with the surface 48. The curved fiber 16 is mounted in the substrate 26 as described hereinabove. The surface 24 of the substrate 26 is carefully ground and polished to expose the core portion 36 of the curved fiber near the center 30 of the surface 24. Ordinarily the grinding rate for the substrate is known to a high degree of accuracy so that the amount of material removed in the grinding operation is controlled by controlling the duration of the grinding process. Using the foregoing described procedures, it is possible to remove a predetermined depth d of the curved fiber to form the surface 36; and it is possible to control the grinding and polishing of the surface 48 of the substrate 40 so that the straight fiber 12 emerges therefrom from the preselected approach angle. After the substrates 26 and 40 are ground and polished, the substrates 26 and 40 are placed together in facing relationship as illustrated in Figure 8e and are clamped together by suitable clamping means (not shown).

Referring to Figure 4, the operation of the three port coupler will now be presented. The ends of the curved fiber 16 are identified as ports 1 and 3, and the straight fiber 12 is identified as port 2. Light propagating in the straight fiber 12 toward the elliptical end 38 will couple into the curved fiber 16 and propagate therein in a clockwise direction to port 1 as seen in Figure 2. Essentially no light from port 2 will propagate in the reverse, or counterclockwise direction in the curved fiber 16 to port 3. Similarly, a portion of light propagating in a counterclockwise direction in the curved fiber 16 from port 1 toward ports 2 and 3 will be coupled out of the curved fiber 16 to port 2 with the remainder of the light propagating within the curved fiber 16 to port 3. Therefore, the coupler 10 will combine light propagating in the straight fiber 12 toward the curved fiber 16 with light that has already been propagating in the curved fiber and will divert a portion of light propagating in the curved fiber 16 from port 1 toward port 3 into the straight fiber 12. Essentially no light which has been propagating from port 3 toward port 1 in the curved fiber 16 will couple into the straight fiber 12.

Coupling ratios can be tuned by adjusting the relative radii of the two fibers. For a given power flux (light power per unit cross-sectional area in the fiber core) total power transmitted by the fiber is roughly proportional to the core cross section area.

The coupling from the curved fiber to the straight fiber should to first order be approximately proportional to the relative cross sectional area of the two fibers.

Referring to Figure 4, for light propagating in the curved fiber 16 in a counterclockwise direction, as a first approximation, the ratio of the light coupled into the straight fiber 12 to the light remaining in the curved fiber 16 depends upon the squares of the radii of the fibers 12 and 16. Table II summarizes the approximate transmission and coupling characteristics of the coupler 10. Referring to Figure 4, light propagating in a counterclockwise direction in the curved fiber 16 is input 1; light propagating in a clockwise direction in the curved fiber 16 is input 3; and light propagating in the straight fiber 12 toward the curved fiber 16 is input 2. If the radius of the straight fiber is half the radius of the curved fiber then about 20% of the light input at 1 will be coupled to output 2, and about 80% of the light will be transmitted to output 3. Similarly, if the radius of the straight fiber is one-tenth of the radius of the curved fiber, then about 1% of light received at input 1 will be coupled to output 2 and about 99% will be transmitted to output 3. Nearly 100% of light applied to input 2 of the straight fiber 12 will couple into the curved fiber 16 and be delivered to output 1. Almost none of the light applied to input 2 will couple into the curved fiber 16 for delivery to output 3. Similarly, nearly 100% of light applied to input 3 will be delivered to output 1, and almost none of the light delivered to input 3 will be delivered to output 2.

TABLE II

| INPUT 1 | OUTPUT 2 | OUTPUT 3 |
| --- | --- | --- |
| 100% | $\dfrac{a^2}{A^2 + a^2}$ | $\dfrac{A^2}{A^2 + a^2}$ |
| 100% (A=.5a) | 20% | 80% |
| 100% (A=.1a) | 1% | 99% |

| INPUT 2 | OUTPUT 1 | OUTPUT 3 |
| --- | --- | --- |
| 100% | 100% | 0 |

| INPUT 3 | OUTPUT 1 | OUTPUT 2 |
| --- | --- | --- |
| 100% | 100% | 0 |

Figure 9 illustrates a plurality of three port couplers 10 constructed according to the invention employed in a sensor array 52. Light is input to a transmit fiber 54 and is coupled sequentially into each of a plurality of sensors 56 as the input light arrives at each corresponding input coupler. Each sensor 56 passes light to a coupler 10 constructed according to the invention for input to the receive branch of the fiber 58. The three port couplers 10 employed in the sensor array 52 have the advantage that no light is coupled out of the array 52, as would be the case if four port couplers (not shown) were used.

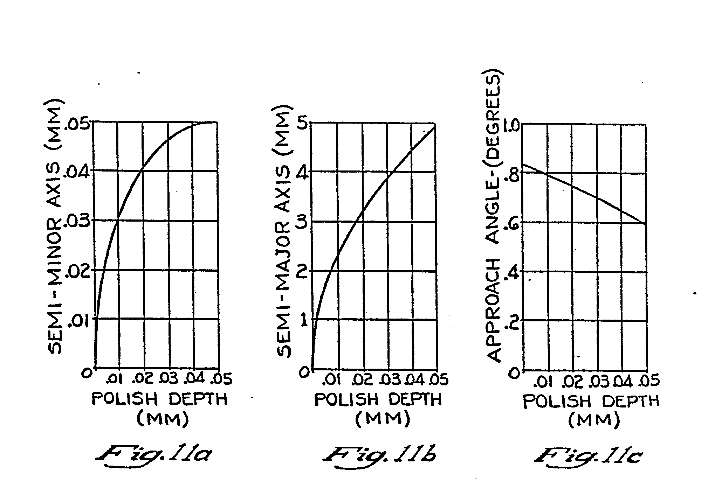

Figure 10 illustrates a communications array comprising a plurality of transmitting and receiving devices 62-65.

The device 62 may send light via a fiber 70 to a three port coupler 72a, which routes a portion of the light input thereto through the fiber 70 to a three port coupler 72b and thence to the device 63. Another portion of light from the device 62 propagates through the coupler 72a through a fiber 73 to a three port coupler 75b and thence to the device 65. Similarly, the device 64 outputs light via a fiber 74 to a three port coupler 75a which directs a portion of the light via fiber 74 and coupler 75b to device 65. Another portion of the light from the device 64 travels to the device 63 via coupler 75a, a fiber 76 and coupler 72b. In like manner, the device 63 outputs light via coupler 72b to the fiber 70 and to a fiber 76 for input to the devices 62 and 64, respectively. The light from the device 63 traveling through the fiber 76 via the coupler 72b is incident upon the three port coupler 75a which couples the light into fiber 74 for input to the device 64. Light from the device 63 passes directly to device 62 through the fiber 70 via couplers 72b and 72a. Light from the device 65 passes through the fiber 74 directly to the device 64 via coupler 75b and 75a. Another portion of light from the device 65 is directed by coupler 75b through the fiber 73 to the coupler 72a and thence to fiber 70 for input to the device 62.

As stated above the degree of mismatch between the contacting areas of the coupled fibres is preferably negligible. By negligible is meant that the loss of signal through mismatch does not adversely affect the apparatus in respect of which the coupler is being used. Thus the percentage of mismatch that is acceptable depends upon the power available and the number of such couplers that might be used in an array.

18.

## CLAIMS

1. A three port fibre optic coupler comprising a first optical fibre having a curved region and a part removed in the curved region to provide a substantially chordal surface, and a second optical fibre having a substantially elliptical end surface, the two said surfaces being connected to one another to couple light propagating in one of said first or second fibres into the other.

2. A coupler as claimed in Claim 1 in which the diameter of the first fibre exceeds that of the second fibre.

3. A coupler as claimed in Claim 1 or Claim 2 in which the said surfaces are substantially equal in area.

4. A coupler as claimed in any of Claims 1 to 3 in which the said surfaces have substantially equal major and minor axes.

5. A coupler as claimed in any of the preceding claims in which the angle of approach of the axis of the second fibre to the said chordal plane is less than the grazing angle at which total internal reflection occurs.

6. A coupler as claimed in any of the preceding claims in wich the said approach angle θ is given by the equation:

$$\theta = \sin^{-1} \left[ \frac{2a-d}{2(a+b)} \right]^{\frac{1}{2}}$$

when $a$ is the radius of the first fibre, $b$ is the radius of curvature of the first fibre in the said curved region and $d$ is depth of the part removed from said curved region.

7.   A method of forming a three part fibre optic coupler comprising the steps of exposing a substantially chordal surface in a curved portion of a first optical fibre, forming a substantially elliptical end surface on a second optical fibre such that the areas of the chordal surface and elliptical surfaces are substantially equal, moutning the first and second optical fibres with their surfaces adjacent one another to cause light propagating in one of the fibres to be coupled into the other.

*Fig. 1*

*Fig. 2*

*Fig. 3*

d = .050 MM

d = .020 MM

d = .010 MM

Y-AXIS (MM)

X-AXIS (MM)

Fig. 4

Fig. 6

Fig. 7

Fig. 5

Fig. 8b

Fig. 8a

Fig. 8c

Fig. 8d

Fig. 8e

Fig. 9

Fig. 10

Fig.11a

Fig.11b

Fig.11c